# EUROPEAN PATENT SPECIFICATION

(11) **EP 1 616 655 B1**
(45) Date of publication and mention of the grant of the patent: **08.11.2006**
(21) Application number: 04425519.8
(22) Date of filing: 13.07.2004
(51) Int. Cl.: B23K 26/32, B23K 26/14

(54) **Method for laser welding of elements of sintered material**
Verfahren zum Schweissen von Elementen aus Sintermaterial
Procédé de soudage d'éléments en matériau fritté

(43) Date of publication of application: 18.01.2006
(73) Proprietor: C.R.F. Società Consortile per Azioni, 10043 Orbassano (TO) (IT)
(72) Inventor: Romanin, Piergiorgio, 10043 Orbassano (Torino) (IT); Asti, Massimo, 10043 Orbassano (Torino) (IT); Corrias, Silvio, 10043 Orbassano (Torino) (IT); Pidria, Marco, 10043 Orbassano (Torino) (IT)
(74) Representative: Gallarotti, Franco

(56) References cited:
- EP-A- 0 444 550
- US-A- 3 947 654
- PATENT ABSTRACTS OF JAPAN vol. 1997, no. 03, 31 March 1997 (1997-03-31) & JP 8 290292 A (KOBE STEEL LTD), 5 November 1996 (1996-11-05)
- PATENT ABSTRACTS OF JAPAN vol. 0144, no. 16 (M-1021), 7 September 1990 (1990-09-07) & JP 2 160185 A (DAIHATSU MOTOR CO LTD), 20 June 1990 (1990-06-20)

## Description

The present invention relates to methods for laser welding of elements of sintered material.

Heretofore, the techniques and processes developed in this field have not been totally satisfactory from the viewpoint of the quality of the weld obtained. This is due to the fact that the sintered material has differences in density with respect to solid steel. During the welding operation, the molten material tends to shrink in volume, going to fill the residual porosities. During the cooling of the molten area, this phenomenon causes the formation of flaws and cracks the compromise the soundness of the weld. Moreover, the air contained in the porosities contributes to the formation of the aforesaid flaws.

Solutions proposed heretofore in the attempt to solve this problem (see for example the German patent application DE 40 19 098) are not wholly satisfactory and in any case entail complications in the process and in the tool dedicated thereto.

JP-A-08 290292 discloses a method for laser welding of a first element and a second element, in which at least said first element is of sintered material, and in which a laser beam is focused in proximity to the welding area, said method being characterised in that the laser welding operation is conducted with the addition of weld material, in form of a solid insert.

The object of the present invention is to overcome all the aforesaid drawbacks, assuring in particular the obtainment of laser welds of sintered materials having a high quality.

In view of the achievement of this object, the invention relates to a method for laser welding of a first element and a second element, in which at least said first element is of sintered material, and in which a laser beam is focused in proximity to the welding area, wherein the laser welding operation is conducted with the addition of weld material, characterised in that the weld material is adducted simultaneously to the welding operation and is in form of metal dusts.

Studies and experiences conducted by the applicant have shown that the method of the invention is able, thanks to the aforesaid characteristic, to overcome all the above drawbacks.

It is to be noted that supplying a flow of dusts at a weld area, during a laser welding operation is known from EP-A-0 444 550.

The dust used as weld material is preferably a mixture of metal dusts, whose composition varies according to the sintered material to be welded.

The grain size of the dusts preferably ranges between 0.010 and 0.100 mm. The dusts are adducted to the weld area by means of an adduction nozzle. Said nozzle can be a separate nozzle from the nozzle normally used for the adduction of the covering gas necessary during the laser welding operation. Alternatively, a single nozzle can be used both for the weld dusts and for the covering gas. The choice depends mainly on the geometry of the junction to be welded.

Also preferably, the angle of adduction of the dusts ranges between 15° and 45° relative to the plane of the junction to be welded. Moreover, for particular types of junctions, particularly shaped laser beams may be used, for example having a rectangular or square section, or with dual focusing focal point (i.e. with dual spot), in order to cover the weld area in optimal fashion.

At the junction between the two elements is preferably provided a throat with suitable geometry.

For particular compositions of sintered materials, it is possible to use laser sources with different wavelengths (CO₂, Nd-YAG, High Power Laser Diode).

The invention shall be further described with reference to the accompanying drawings, provided purely by way of non limiting example, in which:
- Figure 1 schematically shows a first possible implementation of the welding method according to the invention, applied to the weld of a gear for a transmission for a motor vehicle,
- Figure 2 is a view of the device of Figure 1 according to the arrow II of Figure 1, and
- Figure 3 schematically shows another possible implementation of the welding method which does not form part of the invention, applied to the weld of a gear for a transmission for a motor vehicle.

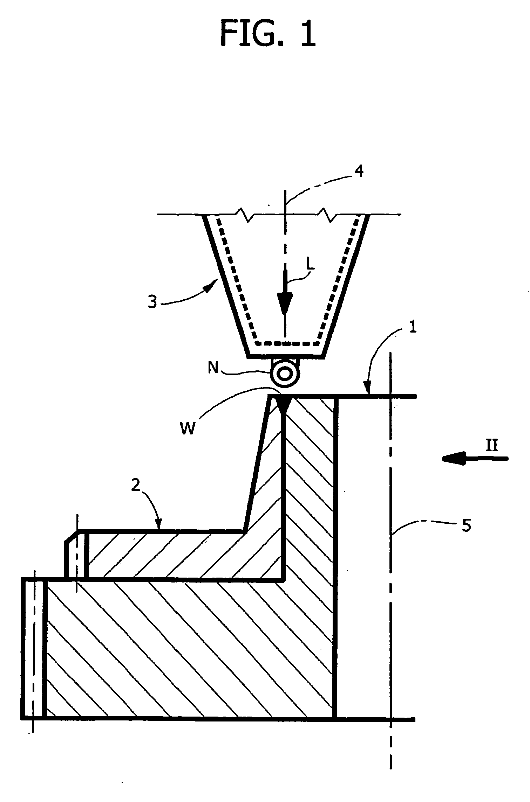

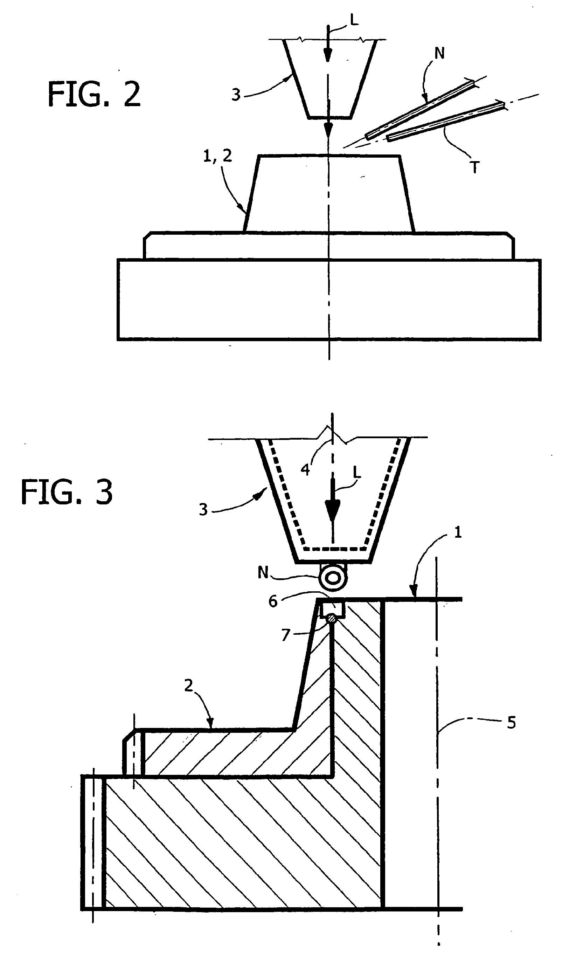

The examples shown in the accompanying figures refer to the case of a gear 1 of sintered material (shown only partially in Figures 1 and 3), to be used in a transmission of a motor vehicle. On the gear 1 is mounted with interference and subsequently laser welded a synchroniser ring 2, for example made of massive or solid steel. The reference number 3 designates the terminal portion of a focusing head of a laser beam L. In the illustrated example, the head is oriented according to a vertical axis 4 parallel to the axis 5 of the gear 1. During the welding process, the gear 1 is set in rotation around its axis (by means of equipment of any known type) in such a way as cause a relative motion of the laser beam L relative to the piece which brings about the execution of an annular weld bead W along the coupling surface between gear 1 and synchroniser ring 2, at one end of the gear.

In the case of the first implementation, of Figures 1 and 2, adjacent to the laser focusing head is provided a nozzle N for the adduction of the covering gas normally used during laser weld processes.

According to the first implementation of the invention, the nozzle N is also used for the adduction of weld material in the form of metal dusts. If necessary, a second nozzle T, separate from the nozzle N, (Figure 2) can be provided for the adduction of the dusts. In this case, the nozzle N is used solely for supplying the covering gas.

As indicated above, the dusts used is a mixture of metal dusts whose compositions varies according to the sintered material to be welded and on the mechanical performance required by the weld.

The grain size of the dusts preferably ranges between 0.010 and 0.100 mm.

Also as stated above, the nozzle used for the adduction of the dusts is preferably inclined by an angle ranging between 15° and 45° relative to the plane of the junction (the horizontal plane with reference to the drawing).

A second possible implementation of the invention is shown in Figure 3, with a representation similar to the one of Figure 1; in said figure, the same reference number of the previous figures are used to designate elements that are technically equivalent to those already described above.

As indicated above, the composition of the weld material provided according to the invention changes according to the applications, and mainly as a function of the sintered material to be welded and on the mechanical performance required by the weld.

In the case of the implementation of Figure 3, in correspondence with the junction between the two components 1, 2 to be welded, a throat with defined geometry, designated by the reference number 6, is provided, preferably formed in part in the component 1 and in part in the component 2.

Once the composition of the weld material for the specific application is determined, at the throat 6 is positioned a drawn element of the identified weld material, designated by the reference 7, for example with substantially annular shape, which is therefore interposed between the two components 1, 2 to be welded. Subsequently the process is completed focusing the laser beam L on the junction area, in which is positioned the element 7 made with the selected weld material.

Note that the equipment usable in the case of the implementation of Figure 3 is substantially similar to that of the first implementation; naturally, in the case of Figure 3 only the nozzle N is provided, for supplying only the covering gas used during the laser welding process, whilst the nozzle T is not necessary. However, nothing prevents the use of a same equipment arranged to be able to carry out both methods, i.e. provided with the nozzles N and T, or with a single nozzle N usable also for the adduction of weld material in the form of metal dusts. Obviously, for the purposes of the second implementation, in the case of equipment provided with both nozzles N, T, the nozzle T will not be used, and in the case of equipment provided with a single nozzle N, said nozzle will be used only to supply the covering gas. The availability of a suitable equipment for both implementation is advantageous because, in a first step, the technique described with reference to Figures 1 and 2 can be used to refine the welding process, i.e. to identify the optimal composition of the weld material; in a second step, the weld material thus identified will be used to obtain the elements 7, which replace the dusts, although they reflect their composition.

Independently of the implementation, the relative position of the axis of the laser beam L relative to the axis of the junction is selected according to the materials to be welded, and in this regard in some cases it may be convenient to focus the laser beam L more on one of the two parts to be welded; for example, with reference to the exemplified case, a third of the diameter of the laser spot could be focused on the gear 1 made of sintered material and two thirds on the solid steel ring 2.

Moreover, as indicated above, the laser beam can be shaped in a particular manner, for example with a non circular section, such as a rectangular or square section, or with a dual-focus optical system with variation of the distance between the spot lasers produced, if this is preferable to cover the weld area in optimal fashion.

Lastly, the method provides for the use of laser sources of any kind, including CO₂, Nd-YAG, High Power Laser Diode sources.

The method can also be used if the ring 2, too, is made of sintered material, instead of solid steel.

Naturally, without altering the principle of the invention, the construction details and the embodiments may vary widely from what is described and illustrated purely by way of example herein, without thereby departing from the scope of the present invention, as defined by the claims.

## Claims

1. A method for laser welding of a first element (1) and a second element (2), in which at least said first element is of sintered material, comprising the step of focusing a laser beam (L) in proximity to the welding area (W, 6), wherein the laser welding operation is conducted with the addition of a weld material (7), **characterised in that** the weld material is adducted simultaneously to the welding operation and is in form of metal dusts.

2. Method as claimed in claim 1, **characterised in that** the dust used is a mixture of metal dusts.

3. Method as claimed in claim 1, **characterised in that** the grain size of the dusts ranges between 0.010 and 0.100 mm.

4. Method as claimed in claim 1, **characterised in that** a nozzle for the adduction of the dusts (T) is provided, separate from a nozzle (N) for the adduction of covering gas.

5. Method as claimed in claim 1, **characterised in that** the dusts are adducted by means of the nozzle (N) used for supplying covering gas.

6. Method as claimed in claim 1, **characterised in that** the angle of adduction of the dusts ranges between 15° and 45° relative to the plane of the weld area (W).

7. Method as claimed in claim 1, **characterised in that** the laser weld is conducted at a junction areas between the first and the second element (1, 2), and that, substantially at the aforesaid junction area , between the first and the second element (1, 2) is provided a seat or throat for receiving the dust material.

8. Method as claimed in claim 7, **characterised in that** the seat or throat is formed in part in the first element (1) and in part in the second element (2) to be welded.

9. Method as claimed in claim 1, **characterised in that** the relative position of the axis of the laser beam (L) relative to the plane of the weld area (W, ) is chosen according to the materials constituting said first and second element (1, 2).

10. Method as claimed in claim 1, **characterised in that** the laser beam (L) is focused to a greater extent on one of said first and second element (1, 2) than on the other.

11. Method as claimed in claim 1, **characterised in that** the laser beam is shaped with a non circular section, such as a square or rectangular section.

12. Method as claimed in claim 1, **characterised in that** the laser beam is shaped by means of a dual-focus optical system with variation of the distance between the laser spots produced.

13. Method as claimed in claim 1, **characterised in that** a laser source chosen among CO₂, Nd-YAG, High Power Laser Diode is used.

## Patentansprüche

1. Ein Verfahren zum Laserschweißen eines ersten Elements (1) und eines zweiten Elements (2), in dem zumindest das genannte erste Element aus gesintertem Material besteht, den Schritt des Fokussierens eines Laserstrahls (L) in der Nähe des Schweißbereichs (W, 6) umfassend, wobei der Laserschweißvorgang unter Hinzufügung eines Schweißmaterials (7) durchgeführt wird, **dadurch gekennzeichnet, dass** das Schweißmaterial gleichzeitig mit dem Schweißvorgang hinzugefügt wird und in der Form von Metallstäuben vorliegt.

2. Verfahren wie in Anspruch 1 beansprucht, **dadurch gekennzeichnet, dass** der verwendete Staub eine Mischung aus Metallstäuben ist.

3. Verfahren wie in Anspruch 1 beansprucht, **dadurch gekennzeichnet, dass** die Korngröße der Stäube zwischen 0,010 und 0,100 mm liegt.

4. Verfahren wie in Anspruch 1 beansprucht, **dadurch gekennzeichnet, dass** getrennt von einer Düse (N) für das Hinzufügen von Schutzgas eine Düse (T) für das Hinzufügen der Stäube zur Verfügung gestellt wird.

5. Verfahren wie in Anspruch 1 beansprucht, **dadurch gekennzeichnet, dass** die Stäube mithilfe der Düse (N), die für das Liefern von Schutzgas verwendet wird, hinzugefügt werden.

6. Verfahren wie in Anspruch 1 beansprucht, **dadurch gekennzeichnet, dass** der Winkel des Hinzufügens der Stäube zwischen 15° und 45° relativ zu der Ebene des Schweißbereichs (W) liegt.

7. Verfahren wie in Anspruch 1 beansprucht, **dadurch gekennzeichnet, dass** das Laserschweißen an einem Verbindungsbereich zwischen dem ersten und dem zweiten Element (1, 2) ausgeführt wird, und dass an dem zuvor genannten Verbindungsbereich zwischen dem ersten und dem zweiten Element (1, 2) ein Sitz oder eine Kehlung zum Empfangen des Staubmaterials vorgesehen ist.

8. Verfahren wie in Anspruch 7 beansprucht, **dadurch gekennzeichnet, dass** der Sitz oder die Kehlung teilweise in dem ersten Element (1) und teilweise in dem zweiten Element (2), die zu schweißen sind, ausgebildet ist.

9. Verfahren wie in Anspruch 1 beansprucht, **dadurch gekennzeichnet, dass** die relative Position der Achse des Laserstrahls (L) relativ zu der Ebene des Schweißbereichs (W) entsprechend den Materialien gewählt wird, die das erste und das zweite Element (1, 2) bilden.

10. Verfahren wie in Anspruch 1 beansprucht, **dadurch gekennzeichnet, dass** der Laserstrahl zu einem größeren Maße auf eines von dem genannten ersten und zweiten Element (1, 2) fokussiert wird als auf das andere.

11. Verfahren wie in Anspruch 1 beansprucht, **dadurch gekennzeichnet, dass** der Laserstrahl mit einem nicht-kreisförmigen Querschnitt, wie einem quadratischen oder rechteckigen Querschnitt, geformt ist.

12. Verfahren wie in Anspruch 1 beansprucht, **dadurch gekennzeichnet, dass** der Laserstrahl mithilfe eines optischen Dual-Fokus-Systems mit einer Variation in dem Abstand zwischen den erzeugten Laserpunkten ausgebildet wird.

13. Verfahren wie in Anspruch 1 beansprucht, **dadurch gekennzeichnet, dass** eine Laserquelle, die aus einem von CO₂, Nd-YAG, Hochleistungs-Laserdiode ausgewählt wird, verwendet wird.

## Revendications

1. Procédé de soudage au laser d'un premier élément (1) et d'un second élément (2), dans lesquels au moins ledit premier élément est en matériau fritté, comprenant l'étape consistant à focaliser un faisceau laser (L) à proximité de la zone de soudage (W, 6), dans lequel l'opération de soudage au laser est réalisée en ajoutant un matériau de soudure (7), **caractérisé en ce que** le matériau de soudure est ajouté simultanément à l'opération de soudage et est en forme de poussières métalliques.

2. Procédé selon la revendication 1, **caractérisé en ce que** la poussière utilisée est un mélange de poussières métalliques.

3. Procédé selon la revendication 1, **caractérisé en ce que** la taille de grain des poussières s'étend entre 0,010 et 0,100 mm.

4. Procédé selon la revendication 1, **caractérisé en ce qu'**une buse pour l'addition des poussières (T) est fournie, séparée d'une buse (N) pour l'addition de gaz de couverture.

5. Procédé selon la revendication 1, **caractérisé en ce que** les poussières sont ajoutées au moyen de la buse (N) utilisée pour fournir un gaz de couverture.

6. Procédé selon la revendication 1, **caractérisé en ce que** l'angle d'addition des poussières s'étend entre 15° et 45° relativement au plan de la zone de soudage (W).

7. Procédé selon la revendication 1, **caractérisé en ce que** le soudage au laser est réalisé à des zones de jonction entre le premier et le second éléments (1, 2) et à ladite jonction entre le premier et le second éléments (1, 2) est ménagé un siège ou une gorge pour recevoir le matériau de poussière.

8. Procédé selon la revendication 7, **caractérisé en ce que** le siège ou la gorge est formé en partie dans le premier élément (1) et en partie dans le second élément (2) à souder.

9. Procédé selon la revendication 1, **caractérisé en ce que** la position relative de l'axe du faisceau laser (L) relativement au plan de la zone de soudage (W) est choisi selon les matériaux constituant ledit premier et second éléments (1, 2).

10. Procédé selon la revendication 1, **caractérisé en ce que** le faisceau laser (L) est focalisé dans une plus grande mesure sur l'un desdits premier et second éléments (1, 2) que sur l'autre.

11. Procédé selon la revendication 1, **caractérisé en ce que** le faisceau laser est façonné avec une section non-circulaire, comme une section carrée ou rectangulaire.

12. Procédé selon la revendication 1, **caractérisé en ce que** le faisceau laser est façonné au moyen d'un système optique double foyer avec variation de la distance entre les points de laser produits.

13. Procédé selon la revendication 1, **caractérisé en ce qu'**une source de laser choisie parmi le CO₂, le Nd-YAG, une diode laser multi-kilowatt est utilisée.
